(19) Europäisches Patentamt
European Patent Office
Office européen des brevets

(11) EP 1 475 933 B1

(12) **EUROPEAN PATENT SPECIFICATION**

(45) Date of publication and mention of the grant of the patent:
**02.01.2008 Bulletin 2008/01**

(51) Int Cl.:
***H04L 25/03*** (2006.01)

(21) Application number: **03010506.8**

(22) Date of filing: **09.05.2003**

(54) **Method for interference cancellation using iterative semi-blind channel estimation**

Verfahren zur Störungsunterdrückung mittels einer iterativen, semi-blinden Kanalschätzung

Procédé de suppression d'interférence avec estimation itérative, semi-aveugle de canal

(84) Designated Contracting States:
**DE FR GB IT**

(43) Date of publication of application:
**10.11.2004 Bulletin 2004/46**

(73) Proprietor: **SIEMENS AKTIENGESELLSCHAFT**
**80333 München (DE)**

(72) Inventors:
- **Hoeher, Peter Adam, Prof.**
  **24226 Heikendorf (DE)**
- **Krakowski, Claudiu**
  **82194 Gröbenzell (DE)**
- **Schoeneich, Hendrik**
  **24118 Kiel (DE)**
- **Xu, Wen, Dr.**
  **82008 Unterhaching (DE)**

(56) References cited:
**US-B1- 6 304 618**

- **HAFEEZ A ET AL: "Co-channel interference cancellation for D-AMPS hand set" VEHICULAR TECHNOLOGY CONFERENCE, 1999 IEEE 49TH HOUSTON, TX, USA 16-20 MAY 1999, PISCATAWAY, NJ, USA,IEEE, US, 16 May 1999 (1999-05-16), pages 1026-1031, XP010342136 ISBN: 0-7803-5565-2**
- **LO B C W ET AL: "ADAPTIVE EQUALIZATION AND INTERFERENCE CANCELLATION FOR WIRELESS COMMUNICATION SYSTEMS" IEEE TRANSACTIONS ON COMMUNICATIONS, IEEE INC. NEW YORK, US, vol. 47, no. 4, April 1999 (1999-04), pages 538-544, XP000860509 ISSN: 0090-6778**
- **WALES S W: "Technique for cochannel interference suppression in TDMA mobile radio systems" IEE PROCEEDINGS: COMMUNICATIONS, INSTITUTION OF ELECTRICAL ENGINEERS, GB, vol. 142, no. 2, 1 April 1995 (1995-04-01), pages 106-14, XP006003915 ISSN: 1350-2425**
- **GIRIDHAR K ET AL: "Nonlinear techniques for the joint estimation of cochannel signals" IEEE TRANSACTIONS ON COMMUNICATIONS, IEEE INC. NEW YORK, US, vol. 45, no. 4, April 1997 (1997-04), pages 473-484, XP002124012 ISSN: 0090-6778**

EP 1 475 933 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### FIELD OF THE INVENTION

The invention deals with training-based channel estimation method and apparatus, especially in context of the interference cancellation (IC) for time-division multiple-access (TDMA) cellular radio systems, such as GSM. With IC techniques, the spectral efficiency of cellular networks can be significantly increased. The invention is particularly suitable, yet not limited, for the downlink, where a single receiving antenna is used in mobile stations (MS). Efficient implementations of the IC method are also described.

### BACKGROUND OF THE INVENTION

In TDMA cellular mobile radio systems, frequency-reuse is applied, i.e., one carrier frequency is used in several cells. This leads to a perturbation of the received signal with one or more interfering signals from nearby cells. The interference caused by overlapping in the frequency domain is called *cochannel interference* (CCI). With CCI cancellation, the capacity of mobile radio systems can be increased significantly.

There are two main concepts to combat CCI and ISI - interference rejection and multi-user detection [1]. The first concept (i.e., interference rejection) is based on adaptively combining filtered received sequences before conventional equalization [2], [3], [4], [5], [6], [7], [8], [9], [10], [11]. For all of these techniques, multiple receiving antennas are a prerequisite, either conceptionally or to achieve satisfactory performance.

The second concept (i.e., multi-user detection) is based on the simultaneous detection of the desired user and the interfering users. Giridhar et al. presented a detector based on the *Viterbi algorithm* (VA) for joint estimation of cochannel signals [12], [13], which we will refer to as *joint Viterbi detector* (JVD) throughout this paper. Given perfect knowledge of the *channel impulse responses* (CIRs) of the desired user and all interfering users, JVD is optimal in the sense of the *maximum-likelihood* (ML) criterion [14], [15] and can therefore be referred to as *joint maximum-likelihood sequence estimation* (JMLSE). The complexity of JMLSE can be reduced by means of truncating the CIRs [16], among other techniques.

In practice, the CIRs have to be estimated because they are a priori not known at the receiver. Ranta et al. examined the performance of JVD with channel estimates obtained by *joint least-squares channel estimation* (JLSCE) [17]. Given perfect knowledge of the data of all users during an observation interval, e.g., by means of overlapping training sequences, JLSCE is optimal with respect to the least-squares criterion. If the bursts of the interfering users are assumed to be asynchronous with respect to the desired user's burst, the shifts between the individual training sequences are usually unknown. In this case, the receiver is blind w.r.t. the data and the channel of the interfering users. Lo and Letaief [18] proposed a combination of the JVD and the *list Viterbi algorithm* (LVA) [19], [20] for this scenario. Channel estimation and tracking of the channel variations is done by the *recursive least-squares* (RLS) algorithm [21]. Channel estimation (CE) and sequence estimation are performed in a parallel manner.

### OBJECTS AND ADVANTAGES OF THE INVENTION

A receiver/an apparatus and a method based on an iterative algorithm for joint channel estimation and cochannel interference cancellation suitable for time-division multiple-access (TDMA) cellular radio systems are proposed. The receiver is blind with respect to the data of the interfering users and training-based w.r.t the data of the desired user and it is therefore referred to as semi-blind. As opposed to concurrent receiver structures, where the number of receiving antennas must exceed the number of cochannel interferers, the proposed receiver is suitable for just one receiving antenna, i.e., the proposed receiver is also suitable for the downlink. Simulation results indicate that with just one receiving antenna and no oversampling the proposed receiver is able to operate at a signal-to-interference ratio of about 0 dB in asynchronous GSM networks given a single dominating interferer.

Since multiple receiving antennas are difficult to implement in the downlink, our focus is on a receiver that is flexible enough to use one or, optionally, multiple receiving antennas. Oversampling is also optional, but not mandatory. The proposed receiver is able to track time-varying fading channels. It is suitable for asynchronous networks.

### SUMMARY OF THE INVENTION

The basis of the proposed method for interference cancellation in TDMA radio systems is the iterative estimation of the channel coefficients of a desired user and an interfering user at least over a training data-/symbol-sequence or a known data-/symbol-sequence of the desired user employing joint data detection in particular by the inventive method disclosed in claim 1.

## BRIEF DESCRIPTION OF THE DRAWINGS

The above set forth and other features of the invention are made more apparent in the ensuing Detailed Description of the Invention when read in conjunction with the attached Drawings, wherein:

Fig.1 shows the structure of a GSM burst and a sketch of the update process of the parallel channel estimation and data detection;

Fig.2 shows the structure of a GSM burst and a sketch of the update process of the sequential channel estimation and data detection:

Fig.3 shows simulation results for the proposed semi-blind receiver-method with parallel channel estimation and data detection (BER versus SIR; TU50 channel model; two and six iterations);

Fig 4 shows simulation results for the proposed semi-blind receiver-method with sequential channel estimation and data detection (BER versus SIR; TU50 channel model; four iterations).

## DETAILED DESCRIPTION OF THE INVENTION

### Channel Model

Throughout this document, the complex baseband notation is used. The baud-rate sampled outputs of linear transmission schemes without CCI can be described by the equivalent, discrete-time ISI channel model [22]

$$y(k) = \sum_{l=0}^{L} h_l(k) \cdot a(k-l) + n(k), \qquad (1)$$

where $k$ is the time index. The channel coefficients $h_1(k)$ comprise the pulse shaping filter, the physical time-varying multipath fading channel, the receiving filter, and the sampling. The finite channel memory length $L$ is assumed to be known at the receiver. The complex sequence $a(k)$ represents the data and the complex values $n(k)$ are additive white Gaussian-distributed noise samples of a random process with one-sided power spectral density $N_0$. An extension to oversampled systems is straightforward by means of polyphase channels.

Taking CCI into account, the received signal can be written as

$$y(k) = \sum_{l=0}^{L} h_l(k) \cdot a(k-l) + \sum_{j=1}^{J} \sum_{l=0}^{L_j} g_{l,j}(k) \cdot b_j(k-l) + n(k) \qquad (2)$$

The first term is the desired signal $y_d(k)$, the second term describes the interference signal $y_i(k)$ caused by $J$ interfering users. Every interfering user $j$ is associated with a CIR $g_{l,j}(k)$. The data sequences of the interfering users are given by $b_j(k)$. In accordance with the GSM testing conditions and for illustrative purposes, in the following emphasis is put on one dominating interferer ($J$=1) and the channel memory lengths of the desired and the interfering user are assumed to be equal. Generalizations are, however, straightforward. Whenever only one interfering user is considered, we will omit the user index $j$.

The signal-to-interference ratio (SIR), which is also referred to as CIR (carrier-to-interference ratio), is defined as:

$$\mathrm{SIR} = \mathrm{E}\{|y_d(k)|^2\} / \mathrm{E}\{|y_i(k)|^2\} \qquad (3)$$

### Maximum-Likelihood Sequence and Channel Estimation

A suitable criterion for the estimation of channel coefficients and data sequences in noisy environments with intersymbol interference is the ML criterion. With this criterion, uncertain parameters are determined such that the probability of the received sequence given a set of hypotheses for the uncertain parameters is maximized [22]. In the case of Gaussian-distributed noise, this is equivalent to finding the set of hypotheses that minimizes the Euclidean distance with respect to the received signal. The ML criterion can easily be formulated to take CCI into account. For the channel model (2), ML estimation can be written as:

$$\hat{\Phi}_{ML} = \left(\hat{\underline{A}}, \hat{\underline{B}}_j, \hat{\underline{h}}, \hat{\underline{g}}_j ; 1 \le j \le J\right)_{ML} = \arg\min_{\Phi}\left\{\left\| \underline{y} - \tilde{\underline{A}} \cdot \tilde{\underline{h}} - \sum_{j=1}^{J} \tilde{\underline{B}}_j \cdot \tilde{\underline{g}}_j \right\|^2\right\} \quad (4)$$

where $\underline{A}$, $\underline{B}_j$ are Toeplitz matrices representing the data and the column vectors $\underline{h} = [h_0, h_1, ..., h_L]^T$ and $\underline{g} = [g_{0,j}, g_{1,j}, ..., g_{L,j}]^T$ represent the channel coefficients for the desired and the interfering users. Throughout this document, hypotheses are identified by a tilde and estimates are identified by a hat. The underscore marks a column vector (lower case letter) or a matrix (capital letter). The ML solution $\hat{\Phi}_{ML}$ is the combination of hypotheses $\tilde{\Phi} = \left(\tilde{\underline{A}}, \tilde{\underline{B}}_j, \tilde{\underline{h}}, \tilde{\underline{g}}_j ; 1 \le j \le J\right)$ that satisfies (4). Note that this combination does not have to be unique.

**Joint Maximum Likelihood Sequence Estimation**

For known channel vectors, (4) describes the JMLSE criterion. Due to its computational complexity (exponential in channel memory length $L$, number of interfering users $J$, and data sequence length $N_d$), an exhaustive search of the optimal sequence is prohibitive. The so-called Viterbi detector (VD), which is based on the well-known VA [23], is an efficient realization of the maximum likelihood sequence estimator (MLSE) if all CIRs are known. It can also be used for JVD by combining the channel states of the desired and the interfering users in one trellis [12]. The computational complexity of JVD is exponential w.r.t. $L$ and $J$ but only linear w.r.t. $N_d$.

**Joint Least Squares Channel Estimation**

As the channel coefficients are not known at the receiver, CE has to be applied. During the training sequence, the receiver has perfect knowledge of the data sequence of the desired user. With regard to the training sequences of the interfering users, four scenarios can be distinguished:

The training sequences of the interfering users are (i) known and synchronous (best case), (ii) known and asynchronous with known shift, (iii) known and asynchronous with unknown shift, or (iv) unknown (worst case). In the case of known and synchronous training sequences, JLSCE [17] can be applied:

$$\left[\hat{\underline{h}}^T, \hat{\underline{g}}_1^T, \cdots, \hat{\underline{g}}_J^T\right]^T = \underbrace{\left(\underline{C}^H \cdot \underline{C}\right)^{-1} \cdot \underline{C}^H}_{\underline{C}^+} \cdot \underline{y} . \quad (5)$$

The joint data matrix $\underline{C} = [\underline{A}, \underline{B}_1, ..., \underline{B}_J]$ combines the training data of the desired and all interfering users. The matrix $\underline{C}^H$ is the Hermitian transposition of $\underline{C}$ and the matrix $\underline{C}^+$ denotes the corresponding pseudo-inverse. The elements of the vector $\underline{y} = \underline{A} \cdot \underline{h} + \sum_{j=1}^{J} \underline{B}_j \cdot \underline{g}_j = \underline{C} \cdot \left[\underline{h}^T, \underline{g}_1^T, \cdots, \underline{g}_J^T\right]$ are the samples of the received signal corresponding to the training data of $\underline{C}$. The number of rows in $\underline{C}$ is the length of the so-called observation interval $N_{obs}$. It can be shown that for orthogonal training sequences the mean squared error is proportional to $\left(L + \sum_{j=1}^{J} L_j + J + 1\right) \cdot N_{obs}^{-1}$, where the first factor is the number of channel coefficients to be estimated. Therefore it is desirable to keep $N_{obs}$ large when using JLSCE. For synchronized training sequences and JLSCE, the length $N_{obs}$ of the observation interval is

$$N_{obs} = N_t - \max\{\, L, \max_j \{L_j\}\} , \quad (6)$$

where $N_t$ is the length of the training sequence. If the lengths of all channels are assumed to be equal, i.e., $L=L_j$ the length $N_{obs}$ is the same as in the case without CCI.

In the more realistic case of asynchronous training sequences (items (ii) and (iii) in the list above) and JLSCE, only the overlapping part of the training sequences of all users can be used for JLSCE, and $N_{obs}$ reduces to

$$N_{obs} = N_t - \max\{\, L, \max_j \{L_j\}\} - \max_j \{\Delta_j\}\,, \qquad (7)$$

where $\Delta_j$ is the shift in symbols of the $j$ -th interfering user's training sequence.

Since the shift(s) may be large in asynchronous systems, the length of the observation interval may be small, which leads to a large mean squared error when using JLSCE. Additionally, the receiver has to know or estimate the shifts of the interfering users. In consideration of this, JLSCE appears to be inappropriate in asynchronous networks - even if the shift(s) of the interfering user(s) is/are known by the receiver.

This motivates to interpret the interfering sequences as unknown data, so that the receiver is blind with respect both to the data and to the training sequences of the interfering users. Such a receiver is referred to as semi-blind. This case is equivalent to the last item in the list above (worst case). Note that for a semi-blind approach, a shift estimation is not required.

Iterative Semi-Blind Decision-Directed Channel Estimation

In the following, an iterative semi-blind algorithm based on a combination of the VA and the LMS algorithm [22] is presented. We introduce the proposed receiver for $J$=1 interfering user and one receiving antenna. The receiver structure can easily be extended to take more interfering users into account or to make use of antenna diversity. It can be used in any TDMA mobile radio system. However, the specific implementation below is based on the popular GSM system [24].

### Initial Channel Estimation

The first step of the algorithm is an initial estimation of the channel coefficients $\underline{h}$ and $\underline{g}$. For the desired user's channel the initial estimation is done, e.g., by calculating the least squares channel estimation (LSCE) with the known symbols of the training sequence using (5) without consideration of the interfering user, i.e., the data matrix $\underline{C}$ reduces to $\underline{A}$. Consequently, this initial estimate is corrupted by CCI. Throughout this document, the initial estimate for the interfering user is chosen as $\hat{\underline{g}} = [0,0,\cdots,0]^T$ or $\hat{\underline{g}} = [0,0.2,\cdots,0]^T$. Experience indicates that the second channel coefficient of the interfering channel tends to be estimated with maximum power this way.

### Joint Data and Channel Estimation

In order to perform joint data and channel estimation, we propose to integrate an adaptive channel estimator into a JVD. Adaptive channel estimation is done (i) to improve the noisy estimates of the channel coefficients of the desired user, (ii) to acquire the channel coefficients of the interfering user(s), and (iii) to track the CIR of slowly time-varying channels.

In the following, we use the LMS algorithm for adaptive channel estimation due to its simplicity compared to more sophisticated adaptive channel estimators. The update is done in a decision-directed fashion. Good results have been obtained by using the most likely survivor as a tentative decision of the data sequences $\{a(k)\}$ and $\{b(k)\}$ in conjunction with a small delay $\delta$. Alternatively, one may use per survivor processing (PSP) [25] or LVA [18] to provide tentative decisions of the data sequences.

Let

$$\underline{\tilde{a}}_{v,\mu}(k+1) = \left[\tilde{a}_{v,\mu}(k+1), \tilde{a}_{v,\mu}(k), \cdots, \tilde{a}_{v,\mu}(k-L+1)\right]^T \quad \text{and}$$
$$\underline{\tilde{b}}_{v,\mu}(k+1) = \left[\tilde{b}_{v,\mu}(k+1), \tilde{b}_{v,\mu}(k), \cdots, \tilde{b}_{v,\mu}(k-L+1)\right]^T \qquad (8)$$

be the hypotheses of the transmitted data symbol sequences for time index $(k+1)$ corresponding to the respective state transition from state $\nu$ to state $\mu$. Let $\hat{\underline{h}}(k)$ and $\hat{\underline{g}}(k)$ be the channel estimates for time index $k$. Then joint data and channel estimation is done as follows:

1) Calculate the branch metrics of the transition from state $\nu$ at time index $k$ to state $\mu$ at time index $k$ +1:

$$\gamma_{\nu,\mu}(k+1) = \left| y(k+1) - \underline{\hat{h}}^T(k) \cdot \underline{\tilde{a}}^T_{\nu,\mu}(k+1) - \underline{\hat{g}}^T(k) \cdot \underline{\tilde{b}}^T_{\nu,\mu}(k+1) \right|^2 . \qquad (9)$$

2) Calculate the path metrics for all transitions at time index $k$ +1:

$$\Gamma_{\nu,\mu}(k+1) = \Gamma_\nu(k) + \gamma_{\nu,\mu}(k+1) . \qquad (10)$$

3) Determine the best path for every state $\mu$ at time index $k$ +1:

$$\Gamma_\mu(k+1) = \min_\nu \{\Gamma_{\nu,\mu}(k+1)\} , \qquad (11)$$

i.e., let only the best branch per state survive.

4) The most likely survivor is traced back $\delta$ symbols to obtain the tentative decisions $\underline{\hat{a}}(k-\delta)$ and $\underline{\hat{b}}(k-\delta)$ , respectively. The decision delay $\delta$ is a design parameter of the algorithm. The choice of $\delta$ is based on a trade-off between the quality of the tentative decisions and the tracking capability.

5) The channel estimates are updated using the LMS algorithm:

$$\underline{\hat{h}}(k+1) = \underline{\hat{h}}(k) + \Delta(k) \cdot e(k) \cdot \underline{\hat{a}}^*(k-\delta) \qquad (12)$$

$$\underline{\hat{g}}(k+1) = \underline{\hat{g}}(k) + \Delta(k) \cdot e(k) \cdot \underline{\hat{b}}^*(k-\delta) , \qquad (13)$$

where $e(k) = y(k-\delta) - \left[ \underline{\hat{h}}^T(k) \cdot \underline{\hat{a}}^T(k-\delta) + \underline{\hat{g}}^T(k) \cdot \underline{\hat{b}}^T(k-\delta) \right]$ is a common error signal and $\Delta(k)$ is the step size of the algorithm, which may be time-varying.

6) Increment the time index and go to step 1) until the end of the burst is reached.

**Iterative Update Process**

The proposed algorithm can be used in conjunction with an arbitrary burst structure. We use the GSM normal burst structure in Fig. 1 as an example. An application to other structures can be implemented in a similar way. According to the GSM test specifications, the whole burst is assumed to be corrupted by one dominating interferer, whose data sequence is a pseudo-noise sequence without burst structure.
The initial channel estimate is determined according to the section 'Initial Channel Estimation'. Then, channel and data estimation for both the desired and the interfering user are performed based on the algorithm described in section "Joint Data and Channel Estimation".

Parallel Channel Estimation and Data Detection

The update process of the first iteration begins at the left end of the midamble and continues to the right end of the burst in a forward recursion. This is illustrated in Fig. 1. After the end of the burst is reached, the last channel estimate is stored and is used as initial channel estimate for the following update process proceeding from the right end of the midamble to the left end of the burst in a backward recursion. The last channel estimate is again stored and can be used as an initial estimate for further iterations. One iteration consists of one forward recursion and one backward recursion. The total number of iterations is denoted by $n$. The final decision on the user's data sequence corresponds to the most likely survivor after the last iteration. Notice that data of desired user and interfering user are detected during each update process.
Notice that for the midamble data (training sequence) as well as the tail bits of the desired user, $\underline{\tilde{a}}_{\nu,\mu}(k)$, $\underline{\hat{a}}_{\nu,\mu}$

($k$) in equations (8) - (13) are known and not need to be estimated. The other data and the CIR of the desired user and interfering user need to be estimated. This is why the proposed channel estimation method is semi-blind.

Sequential Channel Estimation and Data Detection

Another less complex way is that the update (iteration) process is predominately limited within the midamble (the training sequence) of the desired user. Instead of joint channel estimation and data detection in parallel, the channel estimation and data detection are separated into two parts, as shown in Fig. 2. The CE is carried out over the midamble. After the channel coefficients of the desired user and interfering user are jointly determined through iterations over the midamble, the data of the desired user as well as the interfering user (as by-product) over the whole burst are then jointly detected.

Since data detection for the whole burst is done only once (after CE) in comparison with n times in the parallel CE and data detection, less computational efforts are required. Another advantage of the sequential CE and data detection is its good performance also in the case of no interferer. This can be useful especially when the cochannel interferer is not always present.

In a pure noisy environment (e.g. no dominant interferer, or two many interferers), the joint CE and data detection algorithm, if applied, will in general cause a performance degradation. A criteria can be derived which decides after the blind interferer channel estimation whether a conventional algorithm (VA) or a joint algorithm (JVD) will be used for data detection. During data detection a symbol-by-symbol update of the channel coefficients using the LMS algorithm as described above is not necessary.

Reduced State VA for Channel Estimation

Due to the nature of iteration, reduced number of channel taps can be estimated in early iterations. I.e. some of the channel taps are set to zeros in the early iterations and need not to be estimated. In this case, a reduced state VA can be employed which needs much less computational requirements than the full state VA.

The capability of the proposed receiver to combat CCI and ISI in the presence of one dominating interferer $J$=1 without knowledge of the interferer's training sequence is investigated by means of computer simulations. The GSM system was chosen to exemplify the performance of the proposed receiver. In the numerical examples, emphasis is on the GSM 05.05 typical urban channel model with a velocity of $v$ =50 km/h (TU50) at a carrier frequency of $f_c$ = 900 MHz [24]. Perfect frequency hopping is done from burst to burst, which is the worst case with respect to channel estimation. The burst of the desired user and the interferer are asynchronous with unknown shift. Only one receiving antenna is used. No oversampling is done.

In Fig. 3, simulation results for the BER versus SIR are depicted for the proposed receiver with two and six iterations. The curve labeled 'LSCE/VD' represents a conventional receiver with $2^L$ = 8 states ignoring CCI. The next curve labeled 'JLSCE/JVD' represents a joint receiver with $2^{2L}$ = 64 states. The step size for the LMS algorithm is not changed more than once per iteration and is chosen to be in the range from $\Delta$ = 0.04 to $\Delta$ = 0.01; the first iteration starts with the highest value. The tentative decision delay is chosen to be $\delta$ = 1. Since the effective channel memory length of the TU channel is $L$ = 3, $2^{2L}$ = 64 states are considered for the joint trellis used for semi-blind CE and JVD. The SNR is $E_s/N_0$ = 20 dB. For the determination of the bit error rates (BERs), only bit errors of the desired user are considered.

It can be observed that the average BER improves with the number of iterations. Additional simulations indicate that more than six iterations do not lead to further improvements. The BER simulation results show that the proposed receiver is capable to significantly reduce the BER compared to a conventional GSM receiver. For an SIR down to 5 dB the BER performance is comparable to JLSCE/JVD, which requires the perfect knowledge and synchronization of the training sequences of the desired and the interfering users. This result indicates that synchronous GSM networks are not necessary. For an SIR down to 0 dB (where the average signal power of the interfering user is equal to the signal power of the desired user) the BER is below $10^{-2}$ for six iterations.

The proposed semi-blind receiver has been successfully employed in the GSM. Fig. 4 shows some simulation results in realistic environments. The receivers are 16-state decision feedback equalizer, with 2 branches entering each state for the reference receiver and with 4 branches entering each state for the proposed receiver (CE and JVD). It can be seen that for dominant interference ratio DIR = 10 dB or more, a gain of up to 10 dB in CIR can be achieved through the proposed interference cancellation method based on semi-blind CE/JVD. Even for two interferers with the same energy, i.e. DIR = 0, we can still gain about 3 dB.

## REFERENCES

[1] C. Tidestav, M. Sternad, and A. Ahlen, "Reuse within a cell - interference rejection or multi-user detection?," IEEE Trans. Commun., vol. 47, pp. 1511-1522, Oct. 1999.
[2] J.-W. Liang, J.-T. Chen, and A. Paulraj, "A two-stage hybrid approach for CCI/ISI reduction with space-time processing," IEEE Commun. Lett., vol. 1, pp. 163-165, Nov. 1997.
[3] J.-W. Liang, J.-T. Chen, and A. Paulraj, "A space-time-filtered Viterbi receiver for CCI/ISI reduction in TDMA systems," Circuits, Systems and Signal Processing, vol. 17, pp. 85-102, Feb. 1998.
[4] P. Wong and D. Cox, "Low-complexity diversity combining algorithms and circuit architectures for co-channel interference cancellation and frequency-selective fading mitigation," IEEE Trans. Commun., vol. 44, pp. 1107-1116, Sept. 1996.
[5] S. Ariyavistakul, J. Winters, and N. Sollenberger, "Joint equalization and interference suppression for high data rate wireless systems," IEEE J. Select. Areas Commun., vol. 18, pp. 1214-1220, July 2000.
[6] M. Clark, L. Greenstein, andW. Kennedy, "MMSE diversity combining for wide-band digital cellular radio," IEEE Trans. Commun., vol. 40, pp. 1128-1135, June 1992.
[7] C. Despins, D. Falconer, and S. Mahmoud, "Compound strategies of coding, equalization, and space diversity for wideband TDMA indoor wireless channels," IEEE Trans. Veh. Technol., vol. 41, pp. 369-379, Nov. 1992.
[8] H. Yoshino and H. Suzuki, "Interference cancelling characteristics of DFE transversal-combining diversity in mobile radio environment-comparisons with metric-combining schemes," Electronics and Communications in Japan, Part 1, vol. 77, no. 9, pp. 85-98, 1994.
[9] S. Ratnavel and A. Paulraj, "MMSE space-time equalization for GSM cellular systems," in 46th IEEE Vehicular Technology Conference, pp. 331-335, 1996.
[10] B. Petersen and D. Falconer, "Suppression of adjacent-channel, cochannel, and intersymbol interference by equalizers and linear combiners," IEEE Trans. Commun., vol. 42, pp. 3109-3118, Dec. 1994.
[11] H. Trigui and D. Slock, "Cochannel interference cancellation within the current GSM standard," in Proc. IEEE ICUPC'98, pp. 511-515, 1998.
[12] K. Giridhar, S. Chari, J. Shynk, R. Gooch, and D. Artman, "Joint estimation algorithms for cochannel signal demodulation," in Proc. IEEE ICC '93, Geneva, pp. 1497-1501, May 1993.
[13] K. Giridhar, J. Shynk, A. Mathur, S. Chari, and R. Gooch, "Nonlinear techniques for the joint estimation of cochannel signals," IEEE Trans. Commun., vol. 45, pp. 473-484, Apr. 1997.
[14] W. Etten, "Maximum likelihood receiver for multiple channel transmission systems," IEEE Trans. Commun., vol. 24, pp. 276-283, Feb. 1976.
[15] S. Verdú, "Optimum multiuser asymptotic efficiency," IEEE Trans. Commun., vol. 34, pp. 890-897, Sept. 1986.
[16] J.-T. Chen, J.-W. Liang, H.-S. Tsai, and Y.-K. Chen, "Low-complexity joint MLSE receiver in the presence of CCI," IEEE Commun. Letters, vol. 2, pp. 125-127, May 1998.
[17] P. Ranta, A. Hottinen, and Z.-C. Honkasalo, "Co-channel interference cancellation receiver for TDMA mobile systems," in Proc. IEEE ICC '95, Seattle, pp. 17-21, June 1995.
[18] B. Lo and K. Letaief, "Adaptive equalization and interference cancellation for wireless communication systems," IEEE Trans. Commun., vol. 47, pp. 538-545, Apr. 1999.
[19] N. Seshadri and C.-E. Sundberg, "Generalized Viterbi algorithm for error detection with convolutional codes," in Proc. GLOBECOMM '89, Dallas, pp. 43.3.1-43.3.4, 1989.
[20] N. Seshadri and C.-E. Sundberg, "List Viterbi decoding algorithms with applications," IEEE Trans. Commun., vol. 42, pp. 313-323, Feb./Mar./Apr. 1994.
[21] G.-O. Glentis, K. Berberidis, and S. Theodoridis, "Efficient least squares adaptive algorithms for FIR transversal filtering," IEEE Signal Processing Mag., vol. 16, pp. 13-41, July 1999.
[22] J. Proakis, Digital Communications. McGraw-Hill, 4 ed., 2000.
[23] G. Forney, Jr., "The Viterbi algorithm," Proc. IEEE, vol. 61, pp. 268-278, Mar. 1973.
[24] 3GPP, *Digital Cellular Telecommunications System (Phase 2+)*. TS 45.01 - 45.05, http://www.3gpp.org.
[25] R. Raheli, A. Polydoros, and C.-K. Tzou, "Per-survivor processing: a general approach to MLSE in uncertain environments," IEEE Trans. Commun., vol. 43, pp. 354-364, Feb./Mar./Apr. 1995.
[26] R. Lopes and J. Barry, "Blind iterative channel identification and equalization," in Proc. IEEE ICC'01, Helsinki, pp. 2256-2260, June 2001.
[27] X.-M. Chen and P. Hoeher, "Blind turbo equalization for wireless DPSK systems," in Proc. 4th Int. ITG Conf. on Source and Channel Coding, Berlin, pp. 371-378, Jan. 2002.

## Claims

1. Interference cancellation method for TDMA cellular radio systems based on iterative estimation of channel coefficients by analysing received data bursts of a desired user and of at least one interfering user, comprising the steps of:

a) getting an initial estimation of channel coefficients h0 and g0 of the desired user and the interfering user respectively;

b) getting a first estimation of an unknown data sequence ak of the desired user for a first time index k+1, said first time index k+1 being associated with a first bit of a training data-/symbol-sequence or a known data-/symbol-sequence contained in the desired users data burst;

c) getting a first estimation of an unknown data sequence bk of the interfering user for said first time index k+1 ;

d) updating the channel coefficients hk of the desired user and the channel coefficients gk of the interfering user by employing an LMS algorithm and taking the first estimation of the unknown data sequence ak of the desired user and the first estimation of the unknown data sequence bk of the interfering user into consideration;

e) incrementing the time index k+1 ;

f) going through steps b) to e) repeatedly up to a time index associated with a last data bit of the desired users data burst; **characterized by** the steps of

g) using the last updated channel coefficients hk and gk of the desired user and the interfering user as initial channel coefficients h0 and g0 in an process defined in step h);

h) going through steps b) to f) accordingly, starting with the time index associated with the last bit of the training data-/symbol-sequence or the known data-/symbol-sequence of the desired users data burst and ending with a time index associated with a first data bit of the desired users data burst;

i) selecting the last estimation of the unknown data sequence ak as a best approximation of a received data sequence.

**2.** Interference cancellation method for TDMA cellular radio systems based on iterative estimation of channel coefficients by analysing received data bursts of a desired user and of at least one interfering user, comprising the steps of:

j) getting an initial estimation of channel coefficients h0 and g0 of the desired user and the interfering user respectively;

k) getting a first estimation of a training data-/symbol-sequence or a known data-/symbol-sequence contained in the desired users data burst for a first time index k+1, said first time index k+1 being associated with a first bit of the training data-/symbol-sequence or the known data-/symbol-sequence;

l) updating the channel coefficients hk of the desired user and the channel coefficients gk of the interfering user by employing an LMS algorithm and taking the first estimation of the training data-/symbol-sequence or the known data-/symbol-sequence of the desired user into consideration;

m) incrementing the time index k+1 ;

n) going through steps k) to m) repeatedly up to a time index associated with the last bit of the training data-/symbol-sequence or the known data-/symbol-sequence;

**characterized by** the steps of

o) using the last updated channel coefficients hk and gk of the desired user and the interfering user as initial channel coefficients h0 and g0 in an process defined in step p);

p) going through steps k) to n) accordingly, starting with the time index associated with the last bit of the training data-/symbol-sequence or the known data/symbol-sequence and ending with the time index associated with the first bit of the training data-/symbol-sequence or the known data-/symbol-sequence;

q) determining at least an unknown data sequence contained in the desired user’s data burst taking the channel coefficients determined in the previous step into consideration.

**3.** Method according to claim 1) or claim 2), **characterized in that** the initial estimation of the channel coefficients is accomplished by employing an LSCE-algorithm taking only the training sequence or the known data- or symbol sequence contained in the desired users data burst into consideration.

**4.** Method according to one of the proceeding claims, **characterized in that** the estimation of the unknown data sequences is accomplished by employing a JVD - algorithm, a PSP- algorithm or a LVA - algorithm.

**5.** Method according to one of the proceeding claims **characterized in that** the initial estimation of channel coefficients h0 and g0 of the interfering user are set to a constant vector.

## Patentansprüche

**1.** Verfahren zur Störungsunterdrückung für zellulare Funksysteme mit Zeitmultiplex-Vielfachzugriff (TDMA) auf Basis einer iterativen Schätzung der Kanalkoeffizienten durch Analysieren von empfangenen Daten-Bursts eines gewünschten Benutzers und mindestens eines störenden Benutzers, welches die folgenden Schritte umfasst:

a) Beschaffen einer ersten Schätzung der Kanalkoeffizienten h0 und g0 des gewünschten Benutzers bzw. des störenden Benutzers;
b) Beschaffen einer ersten Schätzung einer unbekannten Datensequenz ak des gewünschten Benutzers für einen ersten Zeitindex k+1, wobei der besagte erste Zeitindex k+1 einem ersten Bit einer Trainingsdaten-/Symbolsequenz oder einer bekannten Daten-/Symbolsequenz zugeordnet ist, welche in dem Daten-Burst des gewünschten Benutzers enthalten ist;
c) Beschaffen einer ersten Schätzung einer unbekannten Datensequenz bk des störenden Benutzers für den besagten ersten Zeitindex k+1;
d) Aktualisieren der Kanalkoeffizienten hk des gewünschten Benutzers und der Kanalkoeffizienten gk des störenden Benutzers durch Anwenden eines Least-Mean-Squares (LMS) -Algorithmus unter Berücksichtigung der ersten Schätzung der unbekannten Datensequenz ak des gewünschten Benutzers und der ersten Schätzung der unbekannten Datensequenz bk des störenden Benutzers;
e) Erhöhen des Zeitindex k+1;
f) Wiederholtes Durchlaufen der Schritte b) bis e) bis zu einem Zeitindex, der dem letzten Datenbit des Daten-Bursts des gewünschten Benutzers zugeordnet ist; **gekennzeichnet durch** die Schritte
g) Verwenden der zuletzt aktualisierten Kanalkoeffizienten hk und gk des gewünschten Benutzers und des störenden Benutzers als erste Kanalkoeffizienten h0 und g0 in einem Prozess gemäß Definition in Schritt h);
h) Durchlaufen der Schritte b) bis f) entsprechend, beginnend mit dem Zeitindex, der dem letzten Bit der Trainingsdaten-/Symbolsequenz oder der bekannten Daten-/Symbolsequenz aus dem Daten-Burst des gewünschten Benutzers zugeordnet ist, und endend mit einem Zeitindex, der dem ersten Datenbit aus dem Daten-Burst des gewünschten Benutzers zugeordnet ist;
i) Auswählen der letzten Schätzung der unbekannten Datensequenz ak als eine beste Annäherung einer empfangenen Datensequenz.

**2.** Verfahren zur Störungsunterdrückung für zellulare Funksysteme mit Zeitmultiplex-Vielfachzugriff (TDMA) auf Basis einer iterativen Schätzung der Kanalkoeffizienten durch Analysieren von empfangenen Daten-Bursts eines gewünschten Benutzers und mindestens eines störenden Benutzers, welches die folgenden Schritte umfasst:

j) Beschaffen einer ersten Schätzung der Kanalkoeffizienten h0 und g0 des gewünschten Benutzers bzw. des störenden Benutzers;
k) Beschaffen einer ersten Schätzung einer Trainingsdaten-/Symbolsequenz oder einer bekannten Daten-/Symbolsequenz, welche in dem Daten-Burst des gewünschten Benutzers für einen ersten Zeitindex k+1 enthalten ist, wobei der besagte erste Zeitindex k+1 einem ersten Bit der Trainingsdaten-/Symbolsequenz oder der bekannten Daten-/Symbolsequenz zugeordnet ist;
l) Aktualisieren der Kanalkoeffizienten hk des gewünschten Benutzers und der Kanalkoeffizienten gk des störenden Benutzers durch Anwenden eines Least-Mean-Squares (LMS) -Algorithmus unter Berücksichtigung der ersten Schätzung der Trainingsdaten-/Symbolsequenz oder der bekannten Daten-/Symbolsequenz des gewünschten Benutzers;
m) Erhöhen des Zeitindex k+1;
n) Wiederholtes Durchlaufen der Schritte k) bis m) bis zu einem Zeitindex, der dem letzten Bit der Trainingsdaten-/Symbolsequenz oder der bekannten Daten-/Symbolsequenz zugeordnet ist; **gekennzeichnet durch** die Schritte
o) Verwenden der zuletzt aktualisierten Kanalkoeffizienten hk und gk des gewünschten Benutzers und des störenden Benutzers als erste Kanalkoeffizienten h0 und g0 in einem Prozess gemäß Definition in Schritt p);
p) Durchlaufen der Schritte k) bis n) entsprechend, beginnend mit dem Zeitindex, der dem letzten Bit der Trainingsdaten-/Symbolsequenz oder der bekannten Daten-/Symbolsequenz zugeordnet ist, und endend mit dem Zeitindex, der dem ersten Bit der Trainingsdaten-/Symbolsequenz oder der bekannten Daten-/Symbolsequenz zugeordnet ist;
q) Bestimmen mindestens einer unbekannten Datensequenz, welche in dem Daten-Burst des gewünschten Benutzers enthalten ist, unter Berücksichtigung der im vorangegangenen Schritt bestimmten Kanalkoeffizienten.

**3.** Verfahren gemäß Anspruch 1) oder Anspruch 2), **dadurch gekennzeichnet, dass** die erste Schätzung der Kanalkoeffizienten **dadurch** erzielt wird, dass ein Least-Squares-Kanalschätzungs (LSCE) -Algorithmus angewandt wird, wobei lediglich die Trainingssequenz oder die bekannte Daten- oder Symbolsequenz berücksichtigt wird, die in dem Daten-Burst des gewünschten Benutzers enthalten ist.

4. Verfahren gemäß einem der vorstehenden Ansprüche, **dadurch gekennzeichnet, dass** die Schätzung der unbekannten Datensequenzen **dadurch** erzielt wird, dass ein gemeinsamer Viterbi-Detektor (JVD) -Algorithmus, ein Per-Survivor-Processing (PSP) -Algorithmus oder ein List-Viterbi-Algorithmus (LVA) verwendet wird.

5. Verfahren gemäß einem der vorstehenden Ansprüche, **dadurch gekennzeichnet, dass** die erste Schätzung der Kanalkoeffizienten h0 und g0 des störenden Benutzers auf einen konstanten Vektor gesetzt wird.

**Revendications**

1. Procédé de suppression d'interférence pour des systèmes radio cellulaires TDMA basé sur l'estimation itérative de coefficients de canal en analysant des rafales de données reçues d'un utilisateur désiré et d'au moins un utilisateur interférent, comprenant les étapes de :

   a) obtention d'une estimation initiale de coefficients de canal h0 et g0 de l'utilisateur désiré et de l'utilisateur interférent respectivement ;
   b) obtention d'une première estimation d'une séquence de données inconnue ak de l'utilisateur désiré pour un premier indice temporel k+1, ledit premier indice temporel k+1 étant associé avec un premier bit d'une séquence de données de symboles d'apprentissage ou une séquence de données/de symboles connue contenue dans la rafale de données de l'utilisateur désiré ;
   c) obtention d'une première estimation d'une séquence de données inconnue bk de l'utilisateur interférent pour ledit premier indice temporel k+1 ;
   d) mise à jour des coefficients de canal hk de l'utilisateur désiré et des coefficients de canal gk de l'utilisateur interférent en employant un algorithme LMS et en prenant en compte la première estimation de la séquence de données inconnue ak de l'utilisateur désiré et la première estimation de la séquence de données inconnue bk de l'utilisateur interférent;
   e) incrémentation de l'indice temporel k+1 ;
   f) exécution des étapes b) à e) de façon répétée jusqu' à un indice temporel associé avec un dernier bit de données de la rafale de données de l'utilisateur désiré ; **caractérisé par** les étapes de
   g) utilisation des derniers coefficients de canal hk et gk mis à jour de l'utilisateur désiré et de l'utilisateur interférent comme coefficients de canal initiaux h0 et g0 dans un processus défini à l'étape h) ;
   h) exécution des étapes b) à f) en conséquence, en commençant avec l'indice temporel associé avec le dernier bit de la séquence de données de symboles d'apprentissage ou la séquence de données/de symboles connue de la rafale de données de l'utilisateur désiré et en terminant avec un indice temporel associé avec un premier bit de données de la rafale de données de l'utilisateur désiré ;
   i) sélection de la dernière estimation de la séquence de données inconnue ak comme la meilleure approximation d'une séquence de données reçue.

2. Procédé de suppression d'interférence pour des systèmes radio cellulaires TDMA basé sur l'estimation itérative de coefficients de canal en analysant les rafales de données reçues d'un utilisateur désiré et d'au moins un utilisateur interférent, comprenant les étapes de :

   j) obtention d'une estimation initiale des coefficients de canal h0 et g0 de l'utilisateur désiré et de l'utilisateur interférent respectivement ;
   k) obtention d'une première estimation d'une séquence de données de symboles d'apprentissage ou d'une séquence de données/de symboles connue contenue dans la rafale de données de l'utilisateur désiré pour un premier indice temporel k+1, ledit premier indice temporel k+1 étant associé avec un premier bit de la séquence de données de symboles d'apprentissage ou la séquence de données/de symboles connue;
   l) mise à jour des coefficients de canal hk de l'utilisateur désiré et des coefficients de canal gk de l'utilisateur interférent en employant un algorithme LMS et en prenant en compte la première estimation de la séquence de données de symboles d'apprentissage ou la séquence de données/de symboles connue de l'utilisateur désiré;
   m) incrémentation de l'indice temporel k+1 ;
   n) exécution des étapes k) à m) de façon répétée jusqu'à un indice temporel associé avec le dernier bit de la séquence de données de symboles d'apprentissage ou la séquence de données/de symboles connue ; **caractérisé par** les étapes de
   o) utilisation des derniers coefficients de canal hk et gk mis à jour de l'utilisateur désiré et de l'utilisateur interférent comme coefficients de canal initiaux h0 et g0 dans un processus défini à l'étape p) ;

p) exécution des étapes k) à n) en conséquence, en commençant avec l'indice temporel associé avec le dernier bit de la séquence de données de symboles d'apprentissage ou la séquence de données/de symboles connue et en terminant avec l'indice temporel associé avec le premier bit de la séquence de données de symboles d'apprentissage ou la séquence de données/de symboles connue ;
q) détermination d'au moins une séquence de données inconnue contenue dans la rafale de données de l'utilisateur désiré en prenant en compte les coefficients de canal déterminés à l'étape précédente.

**3.** Procédé selon la revendication 1) ou la revendication 2), **caractérisé en ce que** l'estimation initiale des coefficients de canal est accomplie en employant un algorithme LSCE en ne prenant en compte que la séquence d'apprentissage ou la séquence de données ou de symboles connue contenue dans la rafale de données de l'utilisateur désiré.

**4.** Procédé selon l'une des revendications précédentes, **caractérisé en ce que** l'estimation des séquences de données inconnues est accomplie en employant un algorithme JVD, un algorithme PSP ou un algorithme LVA.

**5.** Procédé selon l'une des revendications précédentes, **caractérisé en ce que** l'estimation initiale des coefficients de canal h0 et g0 de l'utilisateur interférent sont fixées à un vecteur constant.

FIG 1

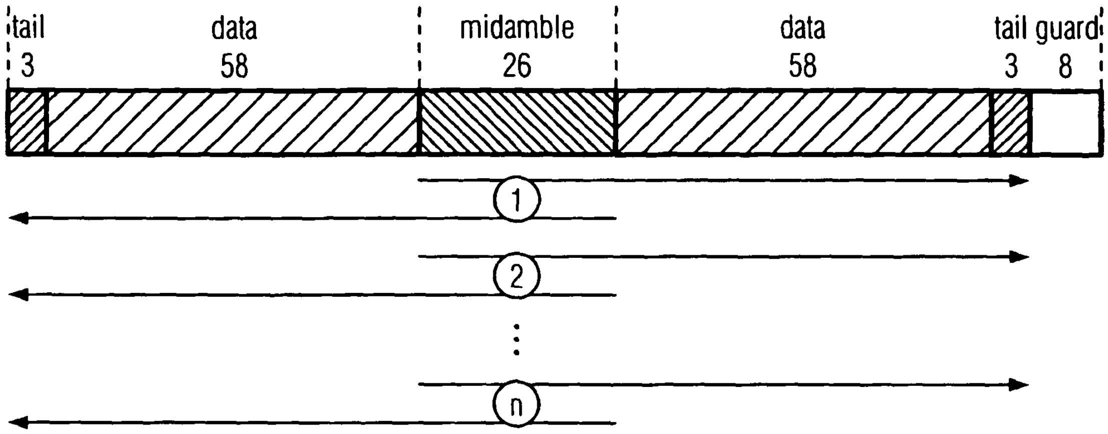
tail
3
data
58
midamble
26
data
58
tail guard
3 8
1
2
n

FIG 2

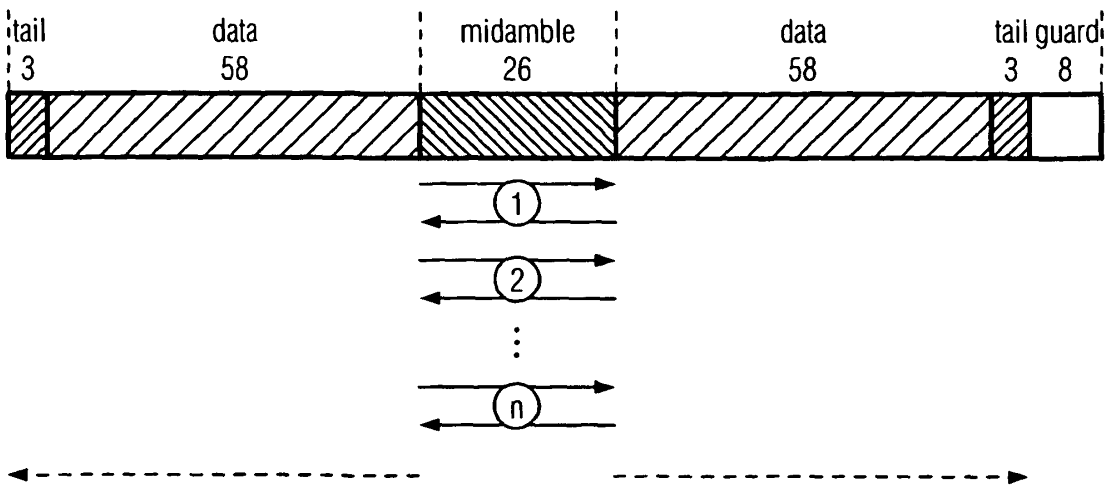
tail
3
data
58
midamble
26
data
58
tail guard
3 8
1
2
n

FIG 3

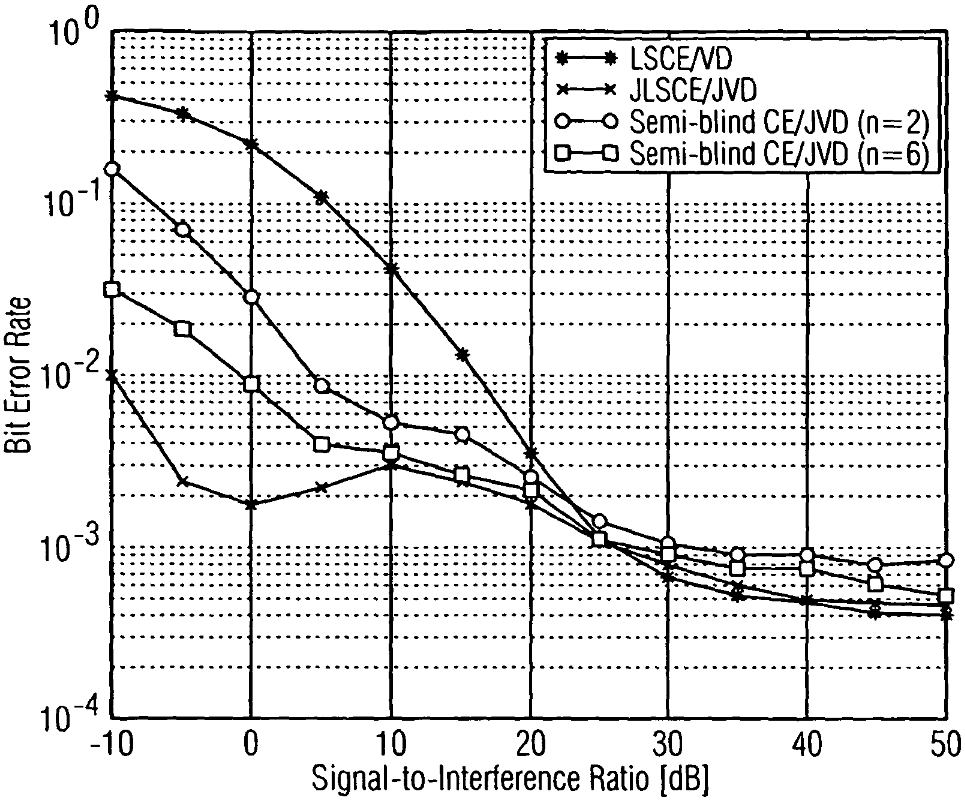
LSCE/VD
JLSCE/JVD
Semi-blind CE/JVD (n=2)
Semi-blind CE/JVD (n=6)
Bit Error Rate
$10^0$
$10^{-1}$
$10^{-2}$
$10^{-3}$
$10^{-4}$
-10
0
10
20
30
40
50
Signal-to-Interference Ratio [dB]

FIG 4

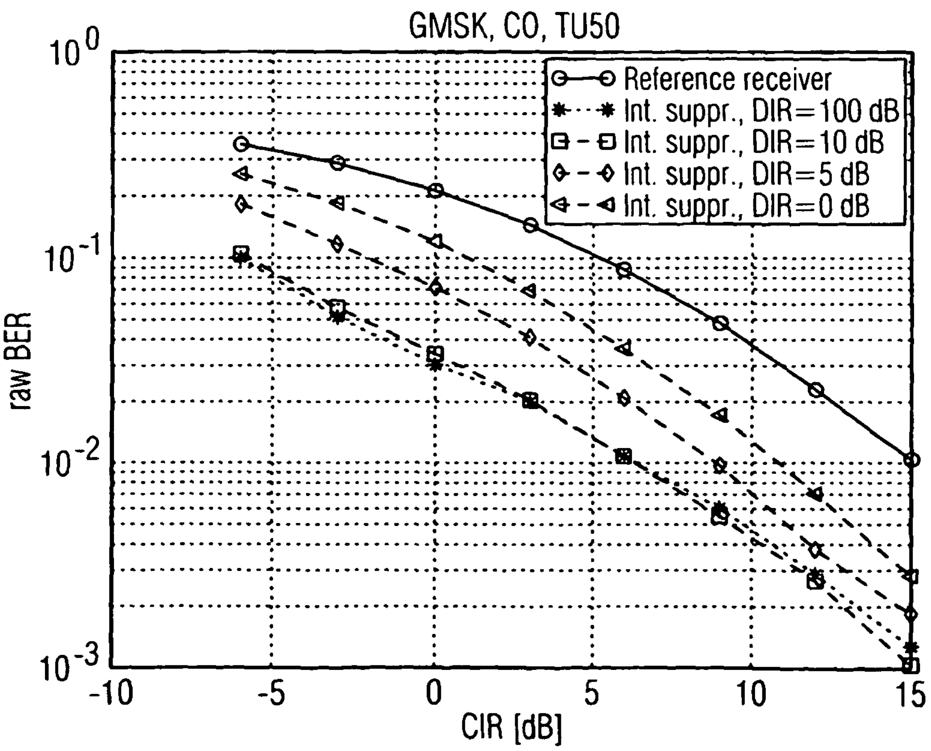
GMSK, CO, TU50
Reference receiver
Int. suppr., DIR=100 dB
Int. suppr., DIR=10 dB
Int. suppr., DIR=5 dB
Int. suppr., DIR=0 dB
raw BER
$10^0$
$10^{-1}$
$10^{-2}$
$10^{-3}$
-10
-5
0
5
10
15
CIR [dB]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **C. TIDESTAV ; M. STERNAD ; A. AHLEN.** Reuse within a cell - interference rejection or multi-user detection?. *IEEE Trans. Commun.,* October 1999, vol. 47, 1511-1522
- **J.-W. LIANG ; J.-T. CHEN ; A. PAULRAJ.** A two-stage hybrid approach for CCI/ISI reduction with space-time processing. *IEEE Commun. Lett,* November 1997, vol. 1, 163-165
- **J.-W. LIANG ; J.-T. CHEN ; A. PAULRAJ.** A space-time-filtered Viterbi receiver for CCI/ISI reduction in TDMA systems. *Circuits, Systems and Signal Processing,* February 1998, vol. 17, 85-102
- **P. WONG ; D. COX.** Low-complexity diversity combining algorithms and circuit architectures for co-channel interference cancellation and frequency-selective fading mitigation. *IEEE Trans. Commun.,* September 1996, vol. 44, 1107-1116
- **S. ARIYAVISTAKUL ; J. WINTERS ; N. SOLLENBERGER.** Joint equalization and interference suppression for high data rate wireless systems. *IEEE J. Select. Areas Commun,* July 2000, vol. 18, 1214-1220
- **M. CLARK ; L. GREENSTEIN ; W. KENNEDY.** MMSE diversity combining for wide-band digital cellular radio. *IEEE Trans. Commun.,* June 1992, vol. 40, 1128-1135
- **C. DESPINS ; D. FALCONER ; S. MAHMOUD.** Compound strategies of coding, equalization, and space diversity for wideband TDMA indoor wireless channels. *IEEE Trans. Veh. Technol.,* November 1992, vol. 41, 369-379
- **H. YOSHINO ; H. SUZUKI.** Interference cancelling characteristics of DFE transversal-combining diversity in mobile radio environment-comparisons with metric-combining schemes. *Electronics and Communications in Japan, Part 1,* 1994, vol. 77 (9), 85-98
- **S. RATNAVEL ; A. PAULRAJ.** MMSE space-time equalization for GSM cellular systems. *46th IEEE Vehicular Technology Conference,* 1996, 331-335
- **B. PETERSEN ; D. FALCONER.** Suppression of adjacent-channel, cochannel, and intersymbol interference by equalizers and linear combiners. *IEEE Trans. Commun.,* December 1994, vol. 42, 3109-3118
- **H. TRIGUI ; D. SLOCK.** Cochannel interference cancellation within the current GSM standard. *Proc. IEEE ICUPC'98,* 1998, 511-515
- **K. GIRIDHAR ; S. CHARI ; J. SHYNK ; R. GOOCH ; D. ARTMAN.** Joint estimation algorithms for cochannel signal demodulation. *Proc. IEEE ICC '93, Geneva,* May 1993, 1497-1501
- **K. GIRIDHAR ; J. SHYNK ; A. MATHUR ; S. CHARI ; R. GOOCH.** Nonlinear techniques for the joint estimation of cochannel signals. *IEEE Trans. Commun,* April 1997, vol. 45, 473-484
- **W. ETTEN.** Maximum likelihood receiver for multiple channel transmission systems. *IEEE Trans. Commun.,* February 1976, vol. 24, 276-283
- **S. VERDÚ.** Optimum multiuser asymptotic efficiency. *IEEE Trans. Commun,* September 1986, vol. 34, 890-897
- **J.-T. CHEN ; J.-W. LIANG ; H.-S. TSAI ; Y.-K. CHEN.** Low-complexity joint MLSE receiver in the presence of CCI. *IEEE Commun. Letters,* May 1998, vol. 2, 125-127
- **P. RANTA ; A. HOTTINEN ; Z.-C. HONKASALO.** Co-channel interference cancellation receiver for TDMA mobile systems. *Proc. IEEE ICC '95, Seattle,* June 1995, 17-21
- **B. LO ; K. LETAIEF.** Adaptive equalization and interference cancellation for wireless communication systems. *IEEE Trans. Commun.,* April 1999, vol. 47, 538-545
- **N. SESHADRI ; C.-E. SUNDBERG.** Generalized Viterbi algorithm for error detection with convolutional codes. *Proc. GLOBECOMM '89, Dallas,* 1989, 43.3.1-43.3.4
- **N. SESHADRI ; C.-E. SUNDBERG.** List Viterbi decoding algorithms with applications. *IEEE Trans. Commun.,* February 1994, vol. 42, 313-323
- **G.-O. GLENTIS ; K. BERBERIDIS ; S. THEODORIDIS.** Efficient least squares adaptive algorithms for FIR transversal filtering. *IEEE Signal Processing Mag.,* July 1999, vol. 16, 13-41
- **J. PROAKIS.** Digital Communications. McGraw-Hill, 2000
- **G. FORNEY, JR.** The Viterbi algorithm. *Proc. IEEE,* March 1973, vol. 61, 268-278
- **R. RAHELI ; A. POLYDOROS ; C.-K. TZOU.** Per-survivor processing: a general approach to MLSE in uncertain environments. *IEEE Trans. Commun.,* February 1995, vol. 43, 354-364
- **R. LOPES ; J. BARRY.** Blind iterative channel identification and equalization. *Proc. IEEE ICC'01, Helsinki,* June 2001, 2256-2260

- **X.-M. CHEN ; P. HOEHER.** Blind turbo equalization for wireless DPSK systems. *Proc. 4th Int. ITG Conf. on Source and Channel Coding, Berlin,* January 2002, 371-378